# EUROPÄISCHE PATENTSCHRIFT

(11) **EP 3 864 958 B1**
(45) Veröffentlichungstag und Bekanntmachung des Hinweises auf die Patenterteilung: **29.05.2024**
(21) Anmeldenummer: 21155781.4
(22) Anmeldetag: 08.02.2021
(51) Int. Cl.: A01K 47/06

(54) **TEMPERIERVORRICHTUNG FÜR EINE BIENENNISTHÖHLE**
TEMPERING DEVICE FOR A BEE NEST HOLE
DISPOSITIF DE MISE EN TEMPÉRATURE POUR UN NID D'ABEILLES

(30) Priorität: 11.02.2020 AT 501012020
(43) Veröffentlichungstag der Anmeldung: 18.08.2021
(73) Patentinhaber: Linser, Peter, 6080 Igls (AT)
(72) Erfinder: Linser, Peter, 6080 Igls (AT)
(74) Vertreter: Torggler & Hofmann Patentanwälte - Innsbruck

(56) Entgegenhaltungen:
- CN-A- 107 466 909
- FR-A1- 2 458 215
- KR-A- 20140 007 165
- US-A1- 2006 148 379
- US-A1- 2015 264 896

## Beschreibung

Die Erfindung betrifft eine Temperiervorrichtung für eine künstliche Bienennisthöhle (Beute) mit den Merkmalen des Oberbegriffs des Anspruchs 1 und eine künstliche Bienennisthöhle mit einer solchen Temperiervorrichtung.

EP 2 915 424 A1 zeigt eine Temperiervorrichtung für eine künstliche Bienennisthöhle, bei welcher ein Heizelement parallel zu zwei Brutwaben zwischen diesen angeordnet wird. Dieser Ansatz eignet sich nicht zur Erleichterung einer Überwinterung eines Bienenvolkes.

US 2017 360 010 A1 zeigt eine elektronisch gesteuerte Temperiervorrichtung für eine künstliche Bienennisthöhle mit einer Vielzahl von Sensoren und Steuerelementen. Diese Lösung ist sehr kompliziert, wartungsaufwändig und fehleranfällig.

Das Dokument FR-A1-2458215 offenbart eine Temperiervorrichtung gemäß dem Oberbegriff von Anspruch 1.

Aufgabe der Erfindung ist die Bereitstellung einer gattungsgemäßen Temperiervorrichtung, durch welche auf einfache Weise eine Temperierung einer künstlichen Bienennisthöhle bei kalter Witterung (Winter und Vorfrühling) erfolgen kann.

Diese Aufgabe wird durch eine Temperiervorrichtung mit den Merkmalen des Anspruchs 1 und eine künstliche Bienennisthöhle mit einer solchen Temperiervorrichtung gelöst. Vorteilhafte Ausführungsformen der Erfindung sind in den abhängigen Ansprüchen definiert.

Die Temperierung erfolgt durch eine starke Reduktion eines Wärmeverlusts (passiv) und in bevorzugten Ausführungsbeispielen durch aktive Zufuhr von Wärme.

Eine erfindungsgemäße Temperiervorrichtung weist in der einfachsten Ausgestaltung auf:
- wenigstens einen, mit einer Unterseite auf eine Zarge der künstlichen Bienennisthöhle aufsetzbaren Rahmen, wobei der wenigstens eine Rahmen zumindest eine Belüftungsöffnung, vorzugsweise eine Vielzahl von Belüftungsöffnungen aufweist
- zumindest eine (vorzugsweise im Rahmen angeordnete) Vakuumdämmplatte
- wenigstens ein diffusionsoffenes Material (vorzugsweise eine Dämmung aus Hanf), welches die zumindest eine Vakuumdämmplatte zumindest teilweise umgibt (zumindest wird eine Mantelfläche vollständig umgeben) und mit der zumindest einen Belüftungsöffnung in Luftaustausch steht, so dass Luft neben der zumindest einen Vakuumdämmplatte vorbei diffundieren kann

Die erfindungsgemäße Temperiervorrichtung weist einen sehr einfachen Aufbau auf, eine elektronische Steuervorrichtung ist nicht erforderlich und auch nicht zwingend vorgesehen.

In dieser Konfiguration erfolgt eine rein passive Temperierung, indem durch die zumindest eine Vakuumdämmplatte ein Wärmeverlust aus der künstlichen Bienennisthöhle stark reduziert wird. Eine Vakuumdämmplatte ist natürlich luftundurchlässig, sodass ohne zusätzliche Maßnahmen ein ungünstiges feuchtes Mikroklima in der Bienennisthöhle entstehen würde. Aufgrund des mit zumindest einer Belüftungsöffnung versehenen Rahmens und des diffusionsoffenen Materials, welches die zumindest eine Vakuumdämmplatte zumindest teilweise umgibt und mit der zumindest einen Belüftungsöffnung in Luftaustausch steht, kann mit Feuchtigkeit beladene Luft neben der zumindest einen Vakuumdämmplatte vorbei ins Freie diffundieren.

Vorzugsweise sind der wenigstens eine Rahmen, die zumindest eine Vakuumdämmplatte und das diffusionsoffene Material in Form eines gemeinsamen Pakets angeordnet, welches als Ganzes handhabbar und so auf eine Zarge einer künstlichen Bienennisthöhle aufsetzbar ist, dass es die Oberseite der Zarge bedeckt. Vorzugsweise umgürtet dabei der Rahmen die zumindest eine Vakuumdämmplatte und das diffusionsoffene Material.

Die Dicke des diffusionsoffenen Materials kann so gewählt werden, dass sich bei bekannter Dimensionierung der Zarge der Bienennisthöhle ein bündiger Sitz der Temperiervorrichtung ergibt.

Vorzugsweise umgibt das diffusionsoffene Material die zumindest eine Vakuumdämmplatte, abgesehen von der Mantelfläche wie folgt:
- vollflächig an einer Unterseite der zumindest einen Vakuumdämmplatte und/oder
- vollflächig an einer Oberseite der zumindest einen Vakuumdämmplatte Vorzugsweise umgibt das diffusionsoffene Material die zumindest eine Vakuumdämmplatte vollständig.

Als diffusionsoffenes Material kommt bevorzugt Hanf zum Einsatz, welcher zu Blöcken verpresst erhältlich ist. Andere Materialien sind denkbar (z. B. Blöcke aus Tierhaaren wie Schafwolle).

Die Größe der Belüftungsöffnung und/oder die Anzahl der Belüftungsöffnungen sollte so gewählt werden, dass sich ein zufriedenstellender Luftaustausch mit der Umgebung ergibt. Zur Realisierung einer Vielzahl von Belüftungsöffnungen im Rahmen kann der Rahmen zum Beispiel als Lochblende ausgebildet sein.

Bevorzugt ist als unterste Schicht der Temperiervorrichtung eine Trennlage mit einem diffusionsoffenen Vlies angeordnet. Das Vlies verhindert ein Eindringen von Bienen in die Temperiervorrichtung.

Bevorzugt sind wenigstens zwei unterhalb des Rahmens angeordnete, vertikal verlaufende Dämmplatten vorgesehen, welche bündig mit einem Mantel der Zarge der Bienennisthöhle in die Zarge einsetzbar sind, so dass zwischen den Dämmplatten ein Aufnahmeraum für eine Anzahl an Wabenrahmen verbleibt. Hierdurch kann eine seitliche Isolierung des Aufnahmeraums an zwei Seiten erzielt werden (an den verbleibenden zwei Seiten werden die Wabenrahmen aufgehängt). Vorzugsweise ist die Fläche der Schmalseiten der vertikal verlaufenden Dämmplatten so bemessen, dass die Schmalseiten vollständig an den Seitenflächen der Zarge, an einer Bodenfläche der Zarge und am oben angeordneten Deckel anliegen.

Bei einem weiteren Ausführungsbeispiel der Erfindung ist vorgesehen, dass unterhalb der zumindest einen Vakuumdämmplatte wenigstens ein elektrisch beheizbares Heizelement (zum Beispiel eine als Massespeicher fungierende Heizplatte, bevorzugt eine Keramikplatte oder Gussschamottplatte oder dergleichen mit zumindest einem Heizdraht) angeordnet ist. Bei diesem Ausführungsbeispiel erfolgt die Temperierung also nicht rein passiv, sondern es wird aktiv Wärme in die künstliche Bienennisthöhle eingebracht.

Bei diesem Ausführungsbeispiel der Erfindung kann vorgesehen sein, dass zwischen der zumindest einen Vakuumdämmplatte und dem wenigstens einen Heizelement zumindest ein thermisches Pufferelement, welches vorzugsweise in Form einer thermischen Pufferplatte ausgebildet ist, angeordnet ist. Durch den Einsatz zumindest eines thermischen Pufferelements kann ein übermäßiger Temperaturanstieg in einem Aufnahmeraum der künstlichen Bienennisthöhle ohne Einsatz einer elektronischen Steuer- oder Regelvorrichtung vermieden werden, indem das thermische Pufferelement überschüssige Wärme zwischenspeichert, vorzugsweise unter Änderung eines Aggregatzustandes, zum Beispiel von fest in flüssig, und es kann eine gleichmäßigere Temperierung erfolgen.

Bevorzugt ist das zumindest eine thermische Pufferelement als Latentspeicher, vorzugsweise in Form eines in eine Hülle eingeschlossenen

Phasenwechselmaterials, besonders bevorzugt einer mit Paraffin gefüllten Hülle, ausgebildet.

Bei einem Ausführungsbeispiel der Erfindung mit elektrischem Heizelement ist zur autarken Energieversorgung des wenigstens einen Heizelements eine Energiequelle in Form eines PV-Paneels und/oder eines Solarpaneels und/oder einer Batterie und/oder eines Windrads vorgesehen. Zusätzlich oder alternativ kann Energie aus einem stationären Energieversorgungsnetz bezogen werden.

Vorzugsweise ist vorgesehen, dass die Energie der Energiequelle und/oder des stationären Energieversorgungsnetzes dem wenigstens einen Heizelement ohne Zwischenschaltung einer Regelelektronik ungeregelt zugeführt wird.

Bei einem Ausführungsbeispiel der Erfindung mit elektrischem Heizelement ist ein in einen Aufnahmeraum für eine Anzahl an Wabenrahmen hineinragendes keramisches Wärmeleitelement vorgesehen, welches durch das wenigstens eine Heizelement beheizbar ist, und durch welches Wärmestrahlung in den Aufnahmeraum strahlbar ist, wobei vorzugsweise vorgesehen ist, dass oberhalb des keramischen Wärmeleitelements ein Luftspalt zur Erzielung einer gewünschten Verzögerung (Latenz) der Wärmeabgabe angeordnet ist.

Dabei ist bevorzugt vorgesehen, dass das keramische Wärmeleitelement sich nur über einen Teil des vom Rahmen aufgespannten Bereichs erstreckt (und bevorzugt zumindest im Wesentlichen zentral in dem vom Rahmen aufgespannten Bereich angeordnet ist), so dass die Wärmestrahlung konzentriert (lokal begrenzt auf den Sitz und die Dimension der Bienentraube) in den Aufnahmeraum eingebracht wird.

Bei einer erfindungsgemäßen künstliche Bienennisthöhle (Beute) mit einer erfindungsgemäßen Temperiervorrichtung sitzt der Rahmen der Temperiervorrichtung auf einer Zarge der Bienennisthöhle bündig auf und die Temperiervorrichtung kann durch einen Deckel als Witterungsschutz nach oben abgedeckt sein.

Ausführungsbeispiele der Erfindung werden anhand der Figuren 1 bis 7 diskutiert. Es zeigen:
- Fig. 1: eine isometrische Ansicht einer künstlichen Bienennisthöhle mit eingesetzter Temperiervorrichtung nach einem ersten Ausführungsbeispiel (passive Temperierung)
- Fig. 2: eine Schnittdarstellung durch eine Mittelebene der künstlichen Bienennisthöhle mit eingesetzter Temperiervorrichtung nach Fig. 1
- Fig. 3: eine Explosionsdarstellung zur Fig. 1
- Fig. 4: eine isometrische Ansicht einer künstlichen Bienennisthöhle mit eingesetzter Temperiervorrichtung nach einem zweiten Ausführungsbeispiel (aktive Temperierung)
- Fig. 5: eine Schnittdarstellung durch eine Mittelebene der künstlichen Bienennisthöhle mit eingesetzter Temperiervorrichtung nach Fig. 4
- Fig. 6: eine Explosionsdarstellung zu einem Teil der Fig. 4
- Fig. 7a,b: eine Explosionsdarstellung und eine isometrische Ansicht zu einem Lagenaufbau der Temperiervorrichtung

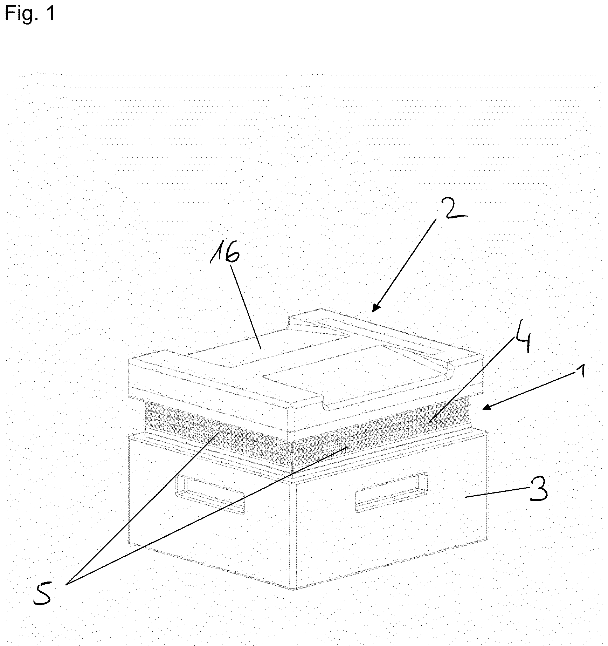

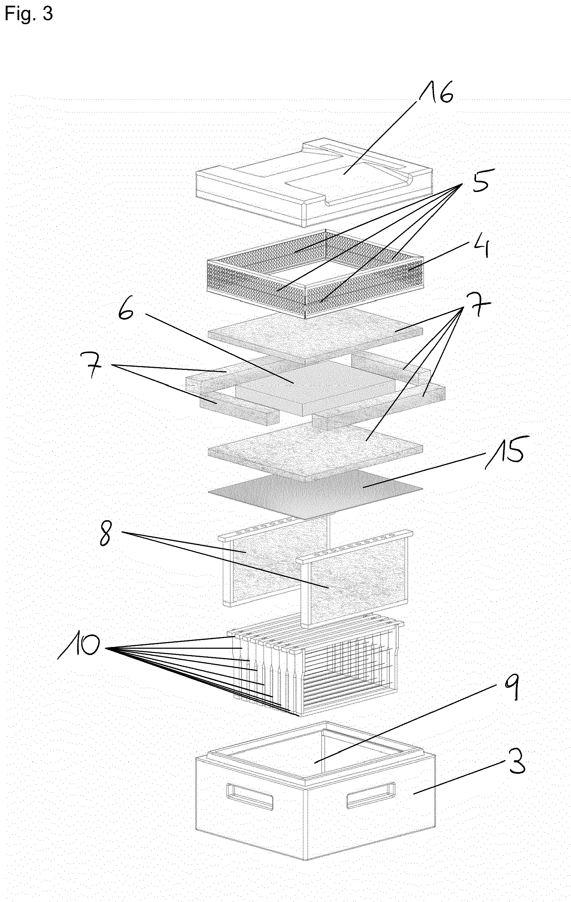

Die Fig. 1 bis 3 betreffen ein erstes Ausführungsbeispiel der Erfindung.

Fig. 1 zeigt eine künstliche Bienennisthöhle 2 mit einer Temperiervorrichtung 1 nach einem ersten Ausführungsbeispiel (passive Temperierung).

Ein Rahmen 4 (hier als Lochblende mit einer Vielzahl 5 von Belüftungsöffnungen ausgebildet) der Temperiervorrichtung 1 sitzt auf einer Zarge 3 der Bienennisthöhle 2 bündig auf. Nach oben ist die Bienennisthöhle 2 durch einen Deckel 16 als Witterungsschutz abgedeckt. Die Temperiervorrichtung 1 lässt sich also nachträglich in bestehende künstliche Bienennisthöhlen 2 zwischen Deckel 16 und oberster Zarge 3 einsetzen oder auf die oberste Zarge 3 aufsetzen, falls die Bienennisthöhle 2 selbst keinen Deckel 16 aufweist. Anders als dargestellt, könnte der Rahmen 4 in Form eines vollflächigen Materials ausgebildet sein und es könnten weniger Belüftungsöffnungen vorgesehen sein, die dafür größer ausgebildet sind.

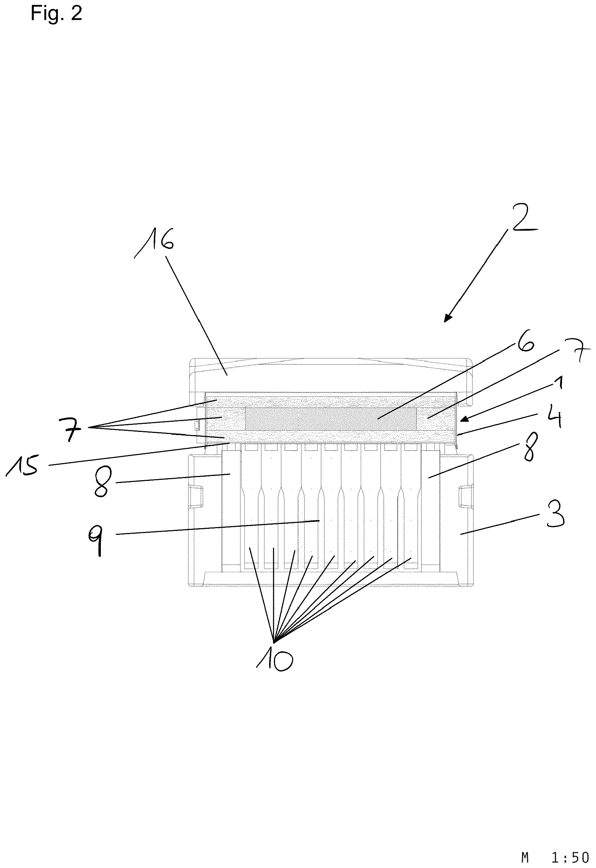

Wie die Fig. 2 zeigt, ist zumindest eine - hier im Rahmen 4 angeordnete - Vakuumdämmplatte 6 vorgesehen, die in diesem Ausführungsbeispiel durch ein diffusionsoffenes Material 7 (hier Platten aus gepresstem Hanf) rundum abgedeckt ist. Über die Vielzahl 5 an Belüftungsöffnungen kann ein Luftaustausch des Aufnahmeraums 9 (in welchem Wabenrahmen 10 angeordnet sind) mit der Umgebung erfolgen, so dass Luft und eine allfällige Feuchtigkeitsbeladung neben der zumindest einen Vakuumdämmplatte 6 vorbei diffundieren kann.

Bevorzugt sind wenigstens zwei unterhalb des Rahmens 4 angeordnete, vertikal verlaufende Dämmplatten 8 vorgesehen, welche bündig mit einem Mantel der Zarge 3 in die Zarge 3 einsetzbar bzw. eingesetzt sind, so dass zwischen den Dämmplatten 8 der Aufnahmeraum 9 für eine Anzahl an Wabenrahmen 10 (hier beispielhaft neun Stück) verbleibt.

Um zu vermeiden, dass Bienen aus dem Aufnahmeraum 9 in die Temperiervorrichtung 1 eindringen, kann als unterste Schicht der Temperiervorrichtung 1 eine Trennlage 15 z. B. aus einem diffusionsoffenen Vlies angeordnet sein. Der Luftaustausch bleibt so unbeeinflusst.

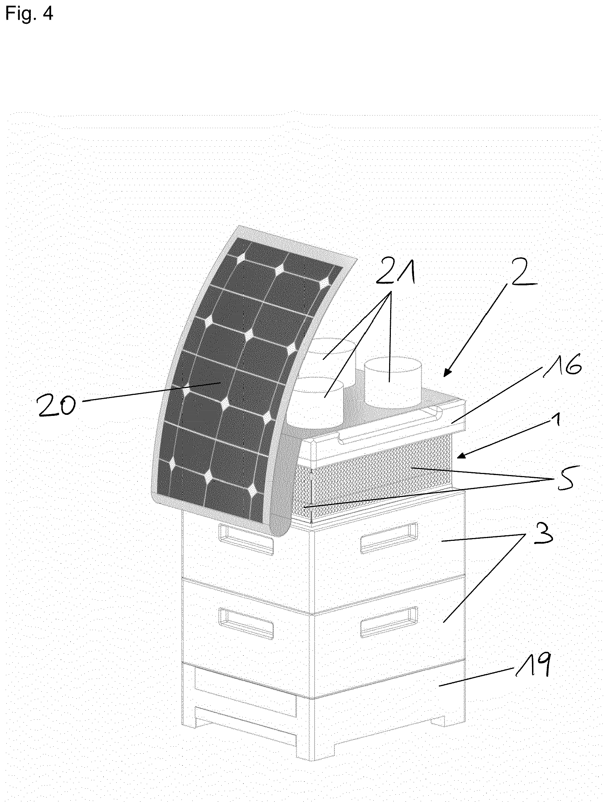

Die Fig. 4 bis 7 betreffen ein zweites Ausführungsbeispiel der Erfindung, welches an sich die Strukturen des ersten Ausführungsbeispiels verwenden kann (sodass die in den Fig. 1 bis 3 zum ersten Ausführungsbeispiel gemachten Ausführungen auch in Bezug auf das zweite Ausführungsbeispiel zu lesen sind und nicht wiederholt werden), jedoch zusätzlich eine aktive Temperierung vorsieht.

Zu diesem Zweck weist die Temperiervorrichtung 1 unterhalb der zumindest einen Vakuumdämmplatte 6 wenigstens ein elektrisch beheizbares Heizelement, hier in Form einer Heizplatte 11, auf.

Bevorzugt ist zwischen der zumindest einen Vakuumdämmplatte 6 und dem wenigstens einen Heizelement zumindest ein thermisches Pufferelement, welches hier in Form einer thermischen Pufferplatte 12 ausgebildet ist, angeordnet. Im Betrieb kann so z. B. eine Kerntemperatur des wenigstens einen elektrisch beheizbaren Heizelements bei maximal 55 °C gehalten werden.

Das zumindest eine thermische Pufferelement ist bevorzugt als Latentspeicher, hier in Form einer mit Paraffin gefüllten Hülle, ausgebildet.

Zur Energieversorgung des wenigstens einen Heizelements kann eine Energiequelle (hier in Form eines PV-Paneels 20 - vgl. Fig. 4) und/oder eines Solarpaneels und/oder einer Batterie und/oder eines Windrad vorgesehen sein, wobei bevorzugt vorgesehen ist, dass die Energie der Energiequelle dem wenigstens einen Heizelement ohne Zwischenschaltung einer Regelelektronik ungeregelt zugeführt wird. Das wenigstens eine Heizelement kann Heizdrähte 23 umfassen, welche mit der Energiequelle kontaktierbar sind. Nicht dargestellt ist ein optionaler Temperaturfühler zur Kontrolle einer Kerntemperatur des wenigstens einen Heizelements.

Die in Fig. 4 erkennbaren symbolisch als Zylinder 21 dargestellten Strukturen dienen als Auflast der Windsicherung, die den lokalen Gegebenheiten anzupassen sind.

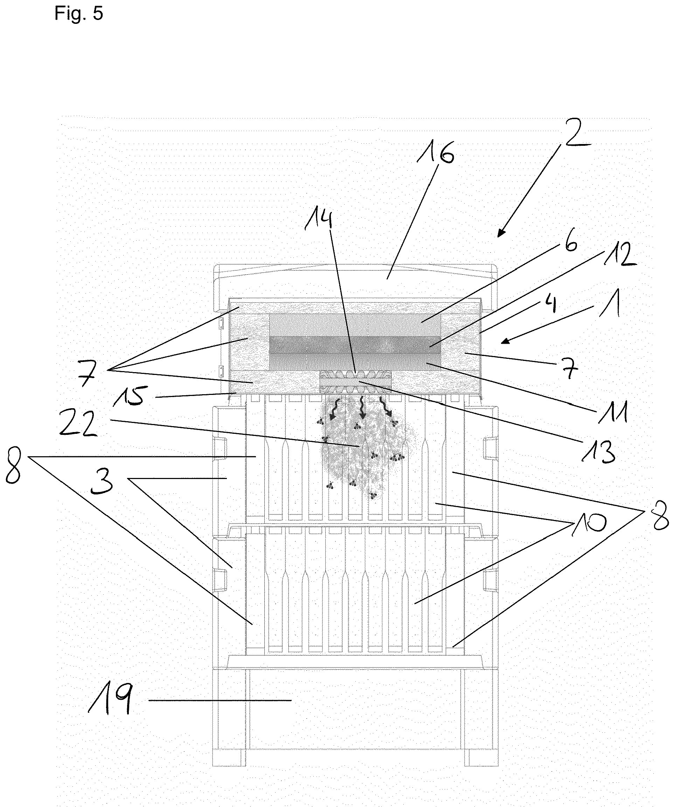

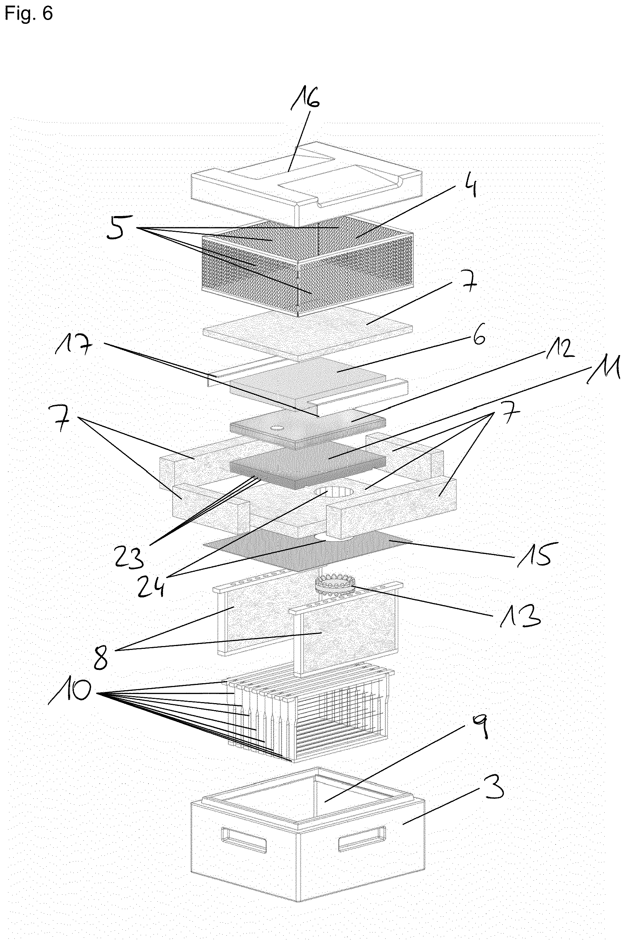

Bevorzugt ist ein in den Fig. 5 und 6 erkennbares, in den Aufnahmeraum 9 für die Anzahl an Wabenrahmen 10 hineinragendes keramisches Wärmeleitelement 13) vorgesehen, welches durch das wenigstens eine Heizelement beheizbar ist, und durch welches Wärmestrahlung in den Aufnahmeraum 9 strahlbar ist, wobei vorzugsweise vorgesehen ist, dass oberhalb des keramischen Wärmeleitelements 13 ein Luftspalt 14 angeordnet ist (vgl. Fig. 5). Im gezeigten Ausführungsbeispiel wird die Ausbildung des Luftspalts 14 durch eine Vielzahl von Vorsprüngen des keramischen Wärmeleitelements 13 gewährleistet. Im Betrieb kann eine Oberflächentemperatur des keramischen Wärmeleitelements 13 in einem Bereich von 30° bis 40 °C erzielt werden.

Es ist erkennbar, dass sich das keramische Wärmeleitelement 13 nur über einen Teil des vom Rahmen 4 aufgespannten Bereichs erstreckt und im gezeigten Ausführungsbeispiel zumindest im Wesentlichen zentral im vom Rahmen 4 aufgespannten Bereich angeordnet ist.

Öffnungen 24 in der an der Unterseite der Temperiervorrichtung 1 angeordneten Platte aus diffusionsoffenem Material 7 und in der Trennlage 15 gestatten den Durchtritt des keramischen Wärmeleitelements 13 durch diese Strukturen.

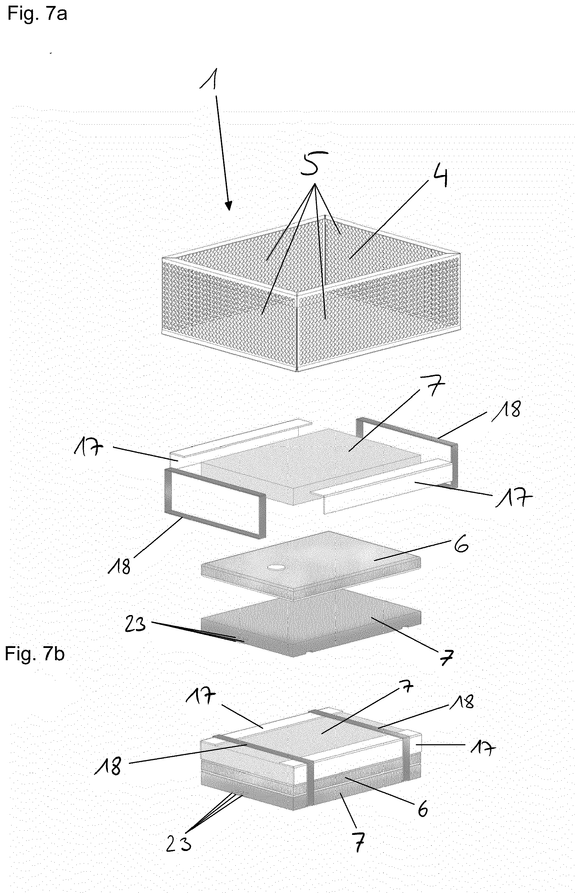

Wie die Fig. 7b zeigt, kann ein Teil (hier: die Vakuumplatte 6 und die obere und untere Abdeckung aus diffusionsoffenem Material) der in Fig. 7a in Isolation dargestellten Temperiervorrichtung 1, z. B. mit Hilfe von Gurten 18 vorkonfektioniert werden. Über die Wahl der Dicke der vertikal verlaufenden Dämmplatten 8 kann eine Anpassung der Größe der Temperiervorrichtung 1 an die Größe der Zarge 3 erfolgen, so dass ein bündiges Einsetzen der Temperiervorrichtung 1 in die Zarge 3 erfolgen kann.

Der Schutzumfang der vorliegenden Erfindung wird durch die angefügten Ansprüche definiert.

### Bezugszeichenliste:

- 1: Temperiervorrichtung
- 2: Bienennisthöhle (Beute)
- 3: Zarge der Bienennisthöhle
- 4: Rahmen
- 5: Vielzahl von Belüftungsöffnungen
- 6: Vakuumdämmplatte
- 7: diffusionsoffenes Material
- 8: vertikal verlaufende Dämmplatte
- 9: Aufnahmeraum für Wabenrahmen
- 10: Wabenrahmen
- 11: Heizplatte
- 12: thermische Pufferplatte
- 13: keramisches Wärmeleitelement
- 14: Luftspalt
- 15: Trennlage
- 16: Deckel
- 17: Winkel
- 18: Gurt
- 19: Bodenteil
- 20: PV-Paneel
- 21: Zylinder
- 22: Einstrahlbereich
- 23: Heizdraht
- 24: Öffnung

## Patentansprüche

1. Temperiervorrichtung (1) für eine künstliche Bienennisthöhle (2), mit:
- wenigstens einem, mit einer Unterseite auf eine Zarge (3) der künstlichen Bienennisthöhle (2) aufsetzbaren Rahmen (4), wobei der wenigstens eine Rahmen (4) zumindest eine Belüftungsöffnung, vorzugsweise eine Vielzahl (5) von Belüftungsöffnungen, aufweist, **gekennzeichnet durch**
- zumindest eine - vorzugsweise im Rahmen (4) angeordnete - Vakuumdämmplatte (6)
- wenigstens ein diffusionsoffenes Material (7) - vorzugsweise eine Dämmung aus Hanf-, welches die zumindest eine Vakuumdämmplatte (6) zumindest vollflächig an einer Mantelfläche der zumindest einen Vakuumdämmplatte (6) umgibt und mit der zumindest einen Belüftungsöffnung in Luftaustausch steht, so dass Luft neben der zumindest einen Vakuumdämmplatte (6) vorbei diffundieren kann.

2. Temperiervorrichtung nach Anspruch 1, wobei wenigstens zwei unterhalb des Rahmens (4) angeordnete, vertikal verlaufende Dämmplatten (8) vorgesehen sind, welche bündig mit einem Mantel der Zarge (3) in die Zarge (3) einsetzbar sind, so dass zwischen den Dämmplatten (8) ein Aufnahmeraum (9) für eine Anzahl an Wabenrahmen (10) verbleibt.

3. Temperiervorrichtung nach wenigstens einem der vorangehenden Ansprüche, wobei das diffusionsoffene Material (7) die zumindest eine Vakuumdämmplatte (6) vollständig umgibt.

4. Temperiervorrichtung nach wenigstens einem der vorangehenden Ansprüche, wobei der wenigstens eine Rahmen (4) als Lochblende ausgebildet ist.

5. Temperiervorrichtung nach wenigstens einem der vorangehenden Ansprüche, wobei als unterste Schicht eine Trennlage (15) mit einem diffusionsoffenen Vlies angeordnet ist.

6. Temperiervorrichtung nach wenigstens einem der vorangehenden Ansprüche, wobei unterhalb der zumindest einen Vakuumdämmplatte (6) wenigstens ein elektrisch beheizbares Heizelement, vorzugsweise in Form einer Heizplatte (11), angeordnet ist.

7. Temperiervorrichtung nach dem vorangehenden Anspruch, wobei zwischen der zumindest einen Vakuumdämmplatte (6) und dem wenigstens einen Heizelement zumindest ein thermisches Pufferelement, welches vorzugsweise in Form einer thermischen Pufferplatte (12) ausgebildet ist, angeordnet ist.

8. Temperiervorrichtung nach dem vorangehenden Anspruch, wobei das zumindest eine thermische Pufferelement als Latentspeicher, vorzugsweise in Form eines in eine Hülle eingeschlossenen Phasenwechselmaterials, besonders bevorzugt einer mit Paraffin gefüllten Hülle, ausgebildet ist.

9. Temperiervorrichtung nach wenigstens einem der Ansprüche 6 bis 8, wobei zur Energieversorgung des wenigstens einen Heizelements eine Energiequelle in Form eines PV-Paneel (20) und/oder eines Solarpaneel und/oder einer Batterie und/oder eines Windrad vorgesehen ist, wobei vorzugsweise vorgesehen ist, dass die Energie der Energiequelle dem wenigstens einen Heizelement ohne Zwischenschaltung einer Regelelektronik ungeregelt zugeführt wird.

10. Temperiervorrichtung nach wenigstens einem der Ansprüche 6 bis 9, wobei ein in einen Aufnahmeraum (9) für eine Anzahl an Wabenrahmen (10) hineinragendes keramisches Wärmeleitelement (13) vorgesehen ist, welches durch das wenigstens eine Heizelement beheizbar ist, und durch welches Wärmestrahlung in den Aufnahmeraum (9) strahlbar ist, wobei vorzugsweise vorgesehen ist, dass oberhalb des keramischen Wärmeleitelements (13) ein Luftspalt (14) angeordnet ist.

11. Temperiervorrichtung nach dem vorangehenden Anspruch, wobei das keramische Wärmeleitelement (13) sich nur über einen Teil des vom Rahmen (4) aufgespannten Bereichs erstreckt und bevorzugt zumindest im Wesentlichen zentral im vom Rahmen (4) aufgespannten Bereich angeordnet ist.

12. Künstliche Bienennisthöhle (2) mit einer Temperiervorrichtung (1) nach wenigstens einem der vorangehenden Ansprüche, wobei der Rahmen (4) der Temperiervorrichtung (1) auf einer Zarge (3) der Bienennisthöhle (2) bündig aufsitzt und vorzugsweise vorgesehen ist, dass die Temperiervorrichtung (1) durch einen Deckel (16) als Witterungsschutz nach oben abgedeckt ist.

## Claims

1. Temperature control device (1) for an artificial bee nest hole (2), with:
- at least one frame (4), which can be fitted, with an underside, on a casing (3) of the artificial bee nest hole (2), wherein the at least one frame (4) has at least one ventilation opening, preferably a plurality (5) of ventilation openings, **characterized by**:
- at least one vacuum insulated panel (6) - preferably arranged in the frame (4)
- at least one diffusion-open material (7) - preferably an insulation made of hemp - which surrounds the at least one vacuum insulated panel (6) at least over the whole surface on a lateral surface of the at least one vacuum insulated panel (6) and is in air exchange with the at least one ventilation opening, with the result that air can diffuse past the at least one vacuum insulated panel (6).

2. Temperature control device according to claim 1, wherein at least two vertically running insulation panels (8) arranged underneath the frame (4) are provided, which can be inserted into the casing (3) flush with an outer cover of the casing (3), with the result that a receiving space (9) for a number of honeycomb frames (10) remains between the insulation panels (8).

3. Temperature control device according to at least one of the preceding claims, wherein the diffusion-open material (7) completely surrounds the at least one vacuum insulated panel (6).

4. Temperature control device according to at least one of the preceding claims, wherein the at least one frame (4) is formed as a perforated sheet.

5. Temperature control device according to at least one of the preceding claims, wherein a separating layer (15) with a diffusion-open non-woven fabric is arranged as the bottom layer.

6. Temperature control device according to at least one of the preceding claims, wherein at least one electrically heatable heating element, preferably in the form of a hot plate (11), is arranged underneath the at least one vacuum insulated panel (6).

7. Temperature control device according to the preceding claim, wherein at least one thermal buffer element, which is preferably formed in the form of a thermal buffer plate (12), is arranged between the at least one vacuum insulated panel (6) and the at least one heating element.

8. Temperature control device according to the preceding claim, wherein the at least one thermal buffer element is formed as a latent heat store, preferably in the form of a phase change material enclosed in a shell, particularly preferably a shell filled with paraffin.

9. Temperature control device according to at least one of claims 6 to 8, wherein a power source in the form of a photovoltaic panel (20) and/or a solar panel and/or a battery and/or a wind turbine is provided to supply power to the at least one heating element, wherein it is preferably provided that the power of the power source is supplied in an unregulated manner to the at least one heating element without interposition of an electronic control system.

10. Temperature control device according to at least one of claims 6 to 9, wherein a ceramic heat-conducting element (13), protruding into a receiving space (9) for a number of honeycomb frames (10), is provided, which can be heated by the at least one heating element, and through which heat radiation can be radiated into the receiving space (9), wherein it is preferably provided that an air gap (14) is arranged above the ceramic heat-conducting element (13).

11. Temperature control device according to the preceding claim, wherein the ceramic heat-conducting element (13) extends only over part of the area spanned by the frame (4) and is preferably arranged at least substantially centrally in the area spanned by the frame (4).

12. Artificial bee nest hole (2) with a temperature control device (1) according to at least one of the preceding claims, wherein the frame (4) of the temperature control device (1) rests flush on a casing (3) of the bee nest hole (2) and it is preferably provided that the temperature control device (1) is covered at the top by a lid (16) as weather protection.

## Revendications

1. Dispositif de thermorégulation (1) pour une cavité en nid d'abeille artificielle (2), avec :
- au moins un cadre (4) pouvant être posé avec une face inférieure sur un châssis (3) de la cavité en nid d'abeille artificielle (2), dans lequel le au moins un cadre (4) présente au moins une ouverture d'aération, de préférence une pluralité (5) d'ouvertures d'aération, **caractérisé par** :
- au moins un panneau isolant sous vide (6) - disposé de préférence dans le cadre (4) -
- au moins un matériau ouvert à la diffusion (7) - de préférence une isolation composée de chanvre -, lequel entoure le au moins un panneau isolant sous vide (6) au moins sur toute la surface sur une surface d'enveloppe du au moins un panneau isolant sous vide (6) et est en échange d'air avec la au moins une ouverture d'aération, de sorte que l'air peut se diffuser en passant à côté du au moins un panneau isolant sous vide (6).

2. Dispositif de thermorégulation selon la revendication 1, dans lequel au moins deux panneaux isolants (8) disposés au-dessous du cadre (4), s'étendant verticalement sont prévus, lesquels peuvent être insérés à fleur d'une enveloppe du châssis (3) dans le châssis (3), de sorte qu'il reste un espace de réception (9) pour un nombre de cadres en nid d'abeille (10) entre les panneaux isolants (8).

3. Dispositif de thermorégulation selon au moins l'une des revendications précédentes, dans lequel le matériau ouvert à la diffusion (7) entoure entièrement le au moins un panneau isolant sous vide (6).

4. Dispositif de thermorégulation selon au moins l'une des revendications précédentes, dans lequel le au moins un cadre (4) est réalisé en tant que diaphragme à trou.

5. Dispositif de thermorégulation selon au moins l'une des revendications précédentes, dans lequel une couche de séparation (15) avec un non-tissé ouvert à la diffusion est disposée en tant que couche la plus basse.

6. Dispositif de thermorégulation selon au moins l'une des revendications précédentes, dans lequel au moins un élément chauffant pouvant être chauffé de manière électrique, de préférence sous forme d'une plaque chauffante (11), est disposé au-dessous du au moins un panneau isolant sous vide (6).

7. Dispositif de thermorégulation selon la revendication précédente, dans lequel au moins un élément tampon thermique, lequel est réalisé de préférence sous forme d'une plaque tampon thermique (12), est disposé entre le au moins un panneau isolant sous vide (6) et le au moins un élément chauffant.

8. Dispositif de thermorégulation selon la revendication précédente, dans lequel le au moins un élément tampon thermique est réalisé en tant qu'accumulateur latent, de préférence sous forme d'un matériau à changement de phase contenu dans une enveloppe, de manière particulièrement préférée une enveloppe remplie de paraffine.

9. Dispositif de thermorégulation selon au moins l'une des revendications 6 à 8, dans lequel pour l'alimentation en énergie du au moins un élément chauffant une source d'énergie sous forme d'un panneau photovoltaïque (20) et/ou d'un panneau solaire et/ou d'une batterie et/ou d'une éolienne est prévue, dans lequel il est prévu de préférence que l'énergie de la source d'énergie soit amenée à le au moins un élément chauffant de manière non régulée sans interposition d'une électronique de régulation.

10. Dispositif de thermorégulation selon au moins l'une des revendications 6 à 9, dans lequel un élément thermo-conducteur céramique (13) faisant saillie dans un espace de réception (9) pour un nombre de cadres en nid d'abeille (10) est prévu, lequel peut être chauffé par le au moins un élément chauffant, et par lequel un rayonnement thermique peut être irradié dans l'espace de réception (9), dans lequel il est prévu de préférence qu'un entrefer (14) soit disposé au-dessus de l'élément thermo-conducteur céramique (13).

11. Dispositif de thermorégulation selon la revendication précédente, dans lequel l'élément thermo-conducteur céramique (13) ne s'étend que sur une partie de la zone tendue par le cadre (4) et est disposé de préférence au moins sensiblement de manière centrale dans la zone tendue par le cadre (4).

12. Cavité en nid d'abeille artificielle (2) avec un dispositif de thermorégulation (1) selon au moins l'une des revendications précédentes, dans lequel le cadre (4) du dispositif de thermorégulation (1) repose à fleur sur un châssis (3) de la cavité en nid d'abeille (2) et il est prévu de préférence que le dispositif de thermorégulation (1) soit recouvert par le haut par un couvercle (16) en tant que protection contre les intempéries.
